# EUROPEAN PATENT SPECIFICATION

(11) **EP 0 914 369 B1**
(45) Date of publication and mention of the grant of the patent: **14.05.2003**
(21) Application number: 97936223.3
(22) Date of filing: 23.07.1997
(51) Int. Cl.: C08J 9/14

(54) **USE OF BLOWING AGENT BLENDS IN THE PREPARATION OF POLYISOCYANATE-BASED FOAMS**
VERWENDUNG VON TREIBMITTELMISCHUNGEN ZUR HERSTELLUNG VON SCHAUMSTOFFEN AUF POLYISOCYANATBASIS
UTILISATION DE MELANGES D'AGENTS GONFLANTS DANS LA PREPARATION DE MOUSSES A BASE DE POLYISOCYANATE

(30) Priority: 24.07.1996 US 22574 P
(43) Date of publication of application: 12.05.1999
(73) Proprietor: E.I. DU PONT DE NEMOURS AND COMPANY, Wilmington Delaware 19898 (US)
(72) Inventor: CREAZZO, Joseph, Anthony, Wilmington, DE 19810 (US); HAMMEL, Howard, S., Bear, DE 19701 (US)
(74) Representative: Matthews, Derek Peter
(86) International application number: US9713073
(87) International publication number: WO98003580

(56) References cited:
- WO-A-91/12289
- WO-A-92/17558

## Description

### FIELD OF THE INVENTION

The instant invention relates a process for producing polyurethane and polyisocyanurate foams. More particularly, the instant invention relates to such a process which utilizes an environmentally friendly blowing agent composition consisting of 1,1,2,2-tetrafluoroethane (HFC-134).

### BACKGROUND OF THE INVENTION

Polyisocyanate-based foams are well known in the art in a variety of forms for a variety of purposes, including, for example, as roofing and siding insulation in building construction, and as insulation in the manufacture of domestic and industrial refrigerators and freezers. The foams are typically produced by reaction of a polyisocyanate with an active hydrogen-containing material, usually a polyol, in the presence of a blowing agent. Historically, volatile chlorine-containing halocarbons have been the blowing agents of choice, especially fluorotrichloromethane (CFC-11). These materials, however, are being phased out for their possible involvement in affecting the stratospheric ozone and a perceived global warming effect on the environment.

Smits et al., U.S. Patent No. 4,997,706, disclose rigid closed-cell polyisocyanate-based foams having reduced thermal insulation loss prepared by reaction of a polyisocyanate with an active hydrogen-containing compound in the presence of both (a) a C₂ - C₆ polyfluorocarbon containing no Cl or Br atoms as blowing agent and (b) a blowing agent precursor, more specifically water, which provides CO₂ in situ, as co-blowing agent, through reaction with isocyanate groups of the polyisocyanate. The proportions of the polyfluorocarbon and the blowing agent precursor are such that the initial gas composition within the closed cells of the foam comprise from about 1 to 60 mole percent polyfluorocarbon and from about 40 to 99 mole percent CO₂.

Similarly, Grunbauer et al., U.S. Patent No. 4,972,003, prepare rigid closed-cell polyisocyanate-based foams using gaseous blowing agents, broadly including HFC-134, HPC-134a and HFC-152a in conjunction with about 25-95 mole percent, based on the total moles of blowing agent, of a gas, e.g., CO₂, generated from a blowing agent precursor, e.g., water. The blowing agent composition may be employed as a preblend with an active hydrogen-containing reactant for the polyisocyanate.

The Smits et al. and Grunbauer et al. foaming systems suffer in that they require large proportions of water as a blowing agent precursor. This is not only wasteful of isocyanate (-NCO) groups, which react with water to produce CO₂, but tends to lead to unsatisfactory foam, e.g, refer to U.S. Patent Nos. 5,164,419 and 4,943,597.

### SUMMARY OF THE INVENTION

The invention comprises a process for producing polyisocyanate-based foams, i.e., polyurethane and polyisocyanurate foams, including rigid closed-cell foams, which comprises effecting reaction of a polyisocyanate with an active hydrogen-containing compound bearing two or more active hydrogens, in the form of hydroxyl groups. The polyfluorocarbon component is preblended with the active hydrogen-containing component to form a substantially water-free and homogeneous isocyanate-reactive solution. The preblend is subsequently contacted with the polyisocyanate in a mixing zone of a conventional mixhead to form a substantially water-free reaction mixture, which in turn is allowed to expand at suitable temperatures and pressures to the foamed state.

The products of the process of the invention include closed cell polyurethane and polyisocyanurate foams wherein the cells are substantially completely filled with a polyfluorocarbon blowing agent composition consisting of HFC-134 in the substantial absence of CO₂ as co-blowing agent.

The environmentally friendly polyfluorocarbon blowing agent composition consists of HFC-134. Thus, the blowing agent composition has low or zero ozone depletion potential (ODP) and low halocarbon global warming potential (HGWP) or greenhouse effect.

The blowing agent consisting of HFC-134a is substantially nonflammable.

By "nonflammable", it is meant to refer to such a determination made by test ASTM E 681-85 with modifications listed in draft form, Nov. 93, by ASTM committee E27 or by ASTM E918.

By "low HGWP" effect, it is meant to refer to a compound having a HGWP value of about 0.50 or less, preferably about 0.32 or less, more preferably about 0.30 or less as determined by the method described in D.A. Fisher et al, NATURE, 1990, 344, p. 513; hereby incorporated by reference.

The active hydrogen-containing compounds of this invention can comprise compounds having two or more groups that contain an active hydrogen atom reactive with an isocyanate group, such as described in U.S. Patent No. 4,394,491. Examples of such compounds have at least two hydroxyl groups per molecule, and more specifically comprise polyols, such as polyether or polyester polyols because such compounds can solvate HFC-134 and other hydrogen-containing polyfluorocarbon blowing agents as well as for the reactivity of hydroxyl groups towards isocyanate groups. Examples of such polyols are those which have an equivalent weight of about 50 to about 700, normally of about 70 to about 300, more typically of about 90 to about 270, and carry at least 2 hydroxyl groups, usually 3 to 8 such groups.

The saturated vapor pressure refers to the vapor pressure exerted by a solution of the blowing agent in an active hydrogen-containing component that is defined within a closed space. Given that the blowing agent is normally gaseous and, therefore, a lower-boiling compound than the normally liquid active hydrogen-containing component, the observed saturated vapor pressure at the temperature employed is substantially that of the blowing agent. The saturated vapor pressure of such solutions accordingly corresponds to the reaction pressure that would be required to maintain the blowing agent in solution, 1) in the same active hydrogen-containing composition, 2) at the same concentration and temperature, 3) as a substantially homogeneous mass, either as an isocyanate-reactive composition or as a foam-forming reaction mass containing a suitable polyisocyanate.

A key aspect of the instant invention is based upon the surprising discovery that HFC-134 is more highly soluble than its isomer HFC-134a in active hydrogen-containing compositions and that the resultant mixtures or solutions (B-side compositions) exert lower saturated vapor pressures than do comparable solutions of HFC-134a (and such other recommended blowing agent as HFC-152a over a wide range of temperatures and concentrations). Thus, preblends comprising practical concentrations of HFC-134-based blowing agents may be formulated, maintained, and used in reactions with polyisocyanates under relatively more moderate conditions of temperature and pressure, including ambient, than are required for the other agents. HFC-134 may also be employed in the substantial absence of water as defined herein above. Thus, the higher solubilities and lower vapor pressures of HFC-134 in combination with the active hydrogen-containing substances makes more practical the formulation and use of B-side compositions containing HFC-134 for the production of polyisocyanate-based foams. This combination of properties also facilitates the process of bringing together and mixing the blowing agent, the active hydrogen-containing material and the polyisocyanate under foam-forming reaction conditions because lower operating pressures may be employed to produce desirably homogeneous reaction masses and resultant closed-cell foams.

### BRIEF DESCRIPTION OF THE DRAWING

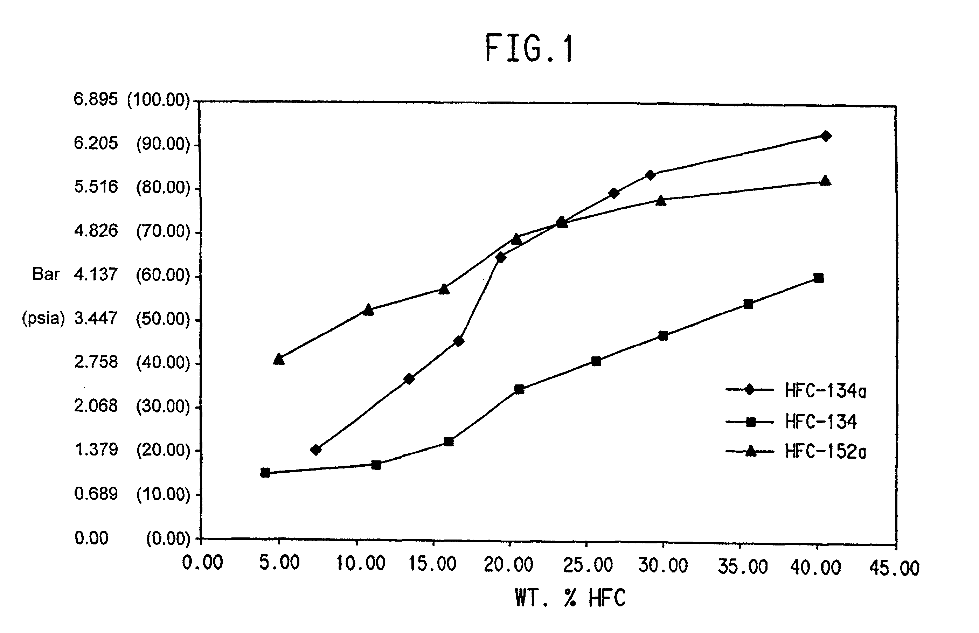

Figure 1 is a plot of the vapor pressures exerted by HFC-134, HFC-134a and HFC-152a from solution in a representative isocyanate-reactive polyol.

### DETAILED DESCRIPTION

The instant invention relates to producing polyisocyanate-based foams utilizing blowing agents consisting of HFC-134 and selected active hydrogen-containing compositions, as isocyanate-reactive blends thereof, e.g., typically known in this art as B-side compositions. The process comprises contacting a polyisocyanate with the active hydrogen-containing material under reaction conditions while in the presence of the polyfluorinated blowing agent. It will be appreciated that some water in the reaction system is generally present when considering many of the active hydrogen-containing compositions, notably the polyether polyols, are hygroscopic. The relatively low water levels defined herein are normally considered not to contribute any significant amounts of CO₂ to the foaming process. Active hydrogen-containing compounds useful in this invention are those that are normally liquid and have two or more groups that contain a hydrogen atom reactive with an isocyanate group. More specifically, suitable hydrogen-containing compounds have two or more hydroxyl groups per molecule and an equivalent weight of about 50 to about 700, normally about 70 to about 300 and desirably about 90 to about 270. Typically, suitable hydrogen-containing compounds are aliphatic and cycloaliphatic polyols carrying 2 to 16, more usually 3 to 8 hydroxyl groups.

Examples of suitable polyols comprise polyether polyols such as polyethylene oxides, polypropylene oxides, mixed polyethylene-propylene oxides with terminal hydroxyl groups, among others. Other suitable polyols can be prepared by reacting ethylene and/or propylene oxide with an initiator having 2 to 16, generally 3 to 8 hydroxyl groups as present, for example, in glycerol, pentaerythritol and carbohydrates such as sorbitol, glucose, sucrose and the like polyhydroxy compounds. Suitable polyether polyols can also include alaphatic or aromatic amine-based polyols. Aromatic polyester polyols may also be employed in the instant invention, e.g., those made by transesterifying polyethylene terephthalate (PET) scrap with a glycol such as diethylene glycol, or made by reacting phthalic anhydride with a glycol. The resulting polyester polyols may be reacted further with ethylene- and/or propylene oxide - to form an extended polyester polyol containing additional internal alkyleneoxy groups.

The polyisocyanate-based foams resulting from the process of the invention are prepared by contacting under reaction conditions at least one organic polyisocyanate with at least one active hydrogen-containing compound described hereinabove while in the presence of the polyfluorocarbon blowing agent also described hereinabove, with the latter two components being employed as an isocyanate-reactive preblend, e.g., B-side composition. The B-side composition of this invention can be prepared in any manner convenient to one skilled in this art, including simply weighing desired quantities of each component and, thereafter, combining them in an appropriate container at appropriate temperatures and pressures.

The concentration of the blowing agent relative to that of the active hydrogen-containing compound, used as a preblend, is normally in the range of from about 5 to about 45 weight percent based on the total weight of these two components, more usually from about 8 to about 35, with from about 10 to at least about 25 weight percent preferred in most cases.

When preparing polyisocyanate-based foams, the polyisocyanate reactant is normally selected in such proportion relative to that of the active hydrogen-containing compound that the ratio of the equivalents of isocyanate groups to the equivalents of active hydrogen groups, i.e., the isocyanate index, is from about 0.9 to about 10 and in most cases from about 1 to about 4. The quantity of the blowing agent composition employed relative to that of the active hydrogen-containing composition is normally also selected within the above 5 to about 45 weight percent range effective to result in a foam whose overall density is in the range of from about 10 to about 500, normally from about 25 to about 100, and usually from about 25 to about 35 kilograms per cubic meter (kg/m³) (wherein 1 kg/m³ equals 0.062 pounds per cubic foot (pcf)).

While any suitable polyisocyanate can be employed in the instant process, examples of suitable polyisocyanates useful for making polyisocyanate-based foam comprise at least one of aromatic, aliphatic and cycloaliphatic polyisocyanates, among others. Representative members of these compounds comprise diisocyanates such as meta- or paraphenylene diisocyanate, toluene-2,4-diisocyanate, toluene-2,6-diisocyanate, hexamethylene-1,6-diisocyanate, tetramethylene-1,4-diisocyanate, cyclohexane-1,4-diisocyanate, hexahydrotoluene diisocyanate (and isomers), napthylene-1,5-diisocyanate, 1-methylphenyl-2,4-phenyldiisocyanate, diphenylmethane-4,4-diisocyanate, diphenylmethane-2,4-diissocyanate, 4,4 -biphenylenediisocyanate and 3,3-dimethyoxy-4,4 biphenylenediisocyanate and 3,3-dimethyldiphenylpropane-4,4-diisocyanate; triisocyanates such as toluene-2,4,6-triisocyanate and polyisocyanates such as 4,4 -dimethyldiphenylmethane-2,2,5,5-tetraisocyanate and the diverse polymethylenepoly-phenylopolyisocyanates, mixtures thereof, among others.

A crude polyisocyanate may also be used in the practice of this invention, such as the crude toluene diisocyanate obtained by the phosgenating a mixture comprising toluene diamines, or the crude diphenylmethane diisocyanate obtained by the phosgenating crude diphenylmethanediamine. Specific examples of such compounds comprise methylene-bridged polyphenylpolyisocyanates, due to their ability to crosslink the polyurethane. The isocyanate index (ratio of equivalents of isocyanates to equivalents of active hydrogen-containing groups) is advantageously from about 0.9 to about 10, in most cases preferably about 1.0 to about 4.0.

It is often desirable to employ minor amounts of certain other ingredients in preparing polyisocyanate-based foams. Among these additional ingredients comprise one or members from the group consisting of catalysts, surfactants, flame retardants, preservatives, colorants, antioxidants, reinforcing agents, filler, antistatic agents, among others well known in this art.

Depending upon the composition, a surfactant can be employed to stabilize the foaming reaction mixture while curing. Such surfactants normally comprise a liquid or solid organosilicone compound. The surfactants are employed in amounts sufficient to stabilize the foaming reaction mixture against collapse and to prevent the formation of large, uneven cells. About 0.2 to about 5 parts or even more of the surfactant per 100 parts by weight polyol are usually sufficient.

One or more catalysts for the reaction of the polyol with the polyisocyanate may be also employed. While any suitable urethane catalyst may be employed, specific catalyst comprise tertiary amine compounds and organometallic compounds. Exemplary such catalysts are disclosed, for example, in U.S. Patent No. 5,164,419, which disclosure is incorporated herein by reference. For example, a catalyst for the trimerization of polyisocyanates, such as an alkali metal alkoxide, alkali metal carboxylate, or quaternary amine compound, may also optionally be employed herein. Such catalysts are used in an amount which measurably increases the rate of reaction of the polyisocyanate. Typical amounts are about 0.1 to about 5 parts of catalyst about per 100 parts by weight of polyol.

In the process of the invention for making a polyisocyanate-based foam, the polyol(s), polyisocyanate and other components are contacted, thoroughly mixed, and permitted to expand and cure into a cellular polymer. The mixing apparatus is not critical, and various conventional types of mixing head and spray apparatus are used. By conventional apparatus is meant apparatus, equiptment, and procedures conventionally employed in the preparation of isocyanate-based foams in which conventional isocyanate-based foam blowing agents, such as fluorotrichloromethane (CCl₃F, CFC-11), are employed. Such conventional apparatus are discussed by: H. Boden et al. in chapter 4 of the Polyurethane Handbook, edited by G. Oertel, Hanser Publishers, New York, 1985; a paper by H. Grunbauer et al. titled "Fine Celled CFC-Free Rigid Foam - New Machinery with Low Boiling Blowing Agents" published in Polyurethanes 92 from the Proceedings of the SPI 34th Annual Technical/Marketing Conference, October 21-October 24, 1992, New Orleans, Louisiana; and a paper by M. Taverna et al. titled "Soluble or Insoluble Alternative Blowing Agents? Processing Technologies for Both Alternatives, Presented by the Equiptment Manufacturer", published in Polyurethanes World Congress 1991 from the Proceedings of the SPI/ISOPA September 24-26, 1991, Acropolis, Nice, France. The low vapor pressure of B-side compositions containing blowing agent consisting of HFC-134 allow such B-side compositions to be employed in isocyanated-based foam production in such conventional apparatus.

In a preferred process of the invention, a preblend of certain raw materials is prepared prior to reacting the polyisocyanate and active hydrogen-containing components. For example, it is often useful to blend the polyol(s), blowing agent, surfactant(s), catalysts(s) and other components, except for polyisocyanates, and then contact this blend with the polyisocyanate.

The invention processes are applicable to the production of all kinds of expanded polyurethane foams, including, for example, integral skin, RIM and flexible foams, and in particular rigid closed-cell polymer foams useful in spray insulation as foam-in-place appliance foams, or rigid insulating board stock and in laminates.

### EXAMPLES

The following examples are given to illustrate the invention and should not be interpreted as limiting it in any way. Unless stated otherwise, all parts and percentages are given by weight.

The following examples show the relative solubilities and associated vapor pressures of HFC-134 and HFC-134a in various polyether polyols over a range of temperatures and concentrations. The solubilities are in weight percent of the polyfluorocarbon in solution in the polyol, and the vapor pressures exerted by the candidate blowing agent are expressed as saturated vapor pressures in bar (and pounds per square inch absolute (psia)). The dissolution of the polyfluorocarbon in the polyol and the measurement of vapor pressures at the different concentrations and temperatures were conducted as follows:

### SOLUBILITY TEST PROCEDURE

The solubility tests were run in a Fischer and Porter Glass Pressure Reaction Vessel. The polyol was added to the vessel and deaerated to eliminate the interference of air in the pressure measurements. Liquid HFC was then pressure added in increments and thoroughly mixed. At each increment, the solution was visually inspected for phase separation and vapor pressure was recorded. This was done in constant temperature bath at three (3) temperatures: 10°C, 25°C, 50°C. The limit of solubility was determined by the point at which two layers or an emulsion formed. The vapor pressure was measured after thoroughly mixing, and equilibrating temperature. The gauge pressure was converted to absolute pressure, (bar and PSIA), by correcting for barometric pressure. For comparison, following are: (a) the normal boiling points in degrees centigrade of HFC-134, HFC-134a and, for further reference, HFC-152a; and (b) the vapor pressures of these substances at 10, 25 and 50°C.

| Vapor Pressures, bar (psia) | | | | |
|---|---|---|---|---|
| HFC | B.P. °C | 10°C | 25°C | 50°C |
| 134 | -19.7 | 3.22(46.7) | 5.26(76.3) | 10.65(154.4) |
| 134a | -26.5 | 4.15(60.2) | 6.66(96.6) | 13.19(191.3) |
| 152a | -24.2 | 3.72(54.0) | 5.96(86.5) | 11.77(170.7) |

### Example 1

Figure 1 is a graphical representation of wt.% blowing agent plotted vs. pressure. Figure 1 illustrates that HFC-134 exerts much lower saturated vapor pressures over the range of indicated concentrations in a sucrose based polyether polyol, polyol A, than either HFC-134a or HFC-152a, which translates into a higher degree of utility for HFC-134 as blowing agent for polyisocyanate-based foam production.

That the lower saturated vapor pressures of HFC-134 relative to those of HFC 134a, for example, are not attributable to its higher boiling point alone can be seen by comparing the ratios of the normal vapor pressures of the two isomers at 25°C, viz. 76.3/96.6 = 0.79 against ratios of the saturated vapor pressures taken from Fig. 1 at 10, 15, 20 and 25 weight % of blowing agent at the same 25°C temperature, which ratios are: 18/25 = 0.72; 21/40 = 0.53; 35/65 = 0.54 and 40/75 = 0.53, respectively. The lower saturated vapor pressure ratios reflect the unexpected much higher degree of solvation of HFC-134 by the polyol, hence lower saturated vapor pressures. The same conclusions regarding solvation characteristics, hence blowing agent utility, can be drawn by comparing the saturated vapor pressures of HFC-134 versus those of HFC-152a, and of HFC-134a versus HFC-152a.

### Example 2

This example compares the solubility and saturated vapor pressure characteristics of HFC-134 with those of HFC-134a in a blended polyether polyol normally used to make Intragal Skin Foam, Polyol B. The experimental data are given in Table 1.

The data further indicate the polyol-HFC-134 blend may be employed at lower pressures at ordinary temperatures over a higher range of blowing agent concentrations than comparable blends utilizing HFC-134a.

### Example 3

The procedure of Examples 1 and 2 was repeated employing a propylene oxide polyether polyol, Polyol C. The saturated vapor pressure results are given in Table 2.

The data again establishes the superiority of HFC-134 over the HFC-134a isomer in that (1) the saturated vapor pressures exerted by HFC-134 are lower than those of HFC-134a at substantially all concentrations and temperatures, and (2) HFC-134 provides for homogeneous solutions over a greater range of concentrations and temperatures.

### Example 4

The procedure of the previous examples was repeated with a sucrose polyether, Polyol A. The results are given in Table 3.

The superiority of the saturated vapor characteristics of the solutions of HFC-134 over those of HFC-134a over the range of concentrations and temperatures employed is evident from the tabulated data. For example, with HFC-134 at 25 weight percent concentration less than 2 atmospheres pressure would be required to maintain solution at 10°C and less than 3 atmospheres at 25°C. In contrast, with HFC-134a at the same concentration, 3 atmospheres or more would be required at 10°C and 5 atmospheres or more at 25°C. The substantially lower pressure requirement of HFC-134 translates into a more economic process of using this isomer as blowing agent in combination with the active hydrogen component in a polyisocyanate foaming process.

### Example 5

The procedure of the previous Examples was repeated using a sucrose amine based polyether polyol, Polyol D.

The saturated vapor pressure data are tabulated in Table 4 and again show the superiority of HFC-134 over HFC-134a in exerting much lower saturated vapor pressures over its blends with the polyol at all concentrations and temperatures employed, useful for the production of polyisocyanate-based foams.

### Example 6

The solubility data (Table 5) demonstrate HFC-134 superior solubility with the aromatic-amine-type polyol, Polyol E, for polyisocyanate-based foam production. HFC-134a forms two phases at all the indicated concentrations and temperatures, while in contrast, HFC-134 forms homogeneous solutions over a broad range of concentrations and temperatures.

### Example 7

This example compares the saturated vapor pressures of HFC-134 and HFC-134a mixtures with two typical aromatic polyester polyols. Polyol F is a phthalic anhydride based polyester, and Polyol G is a PET based polyester polyol. The data in tables 6A and, 6B below again establish the greater solubility of the HFC-134 isomer in polyester type polyols.

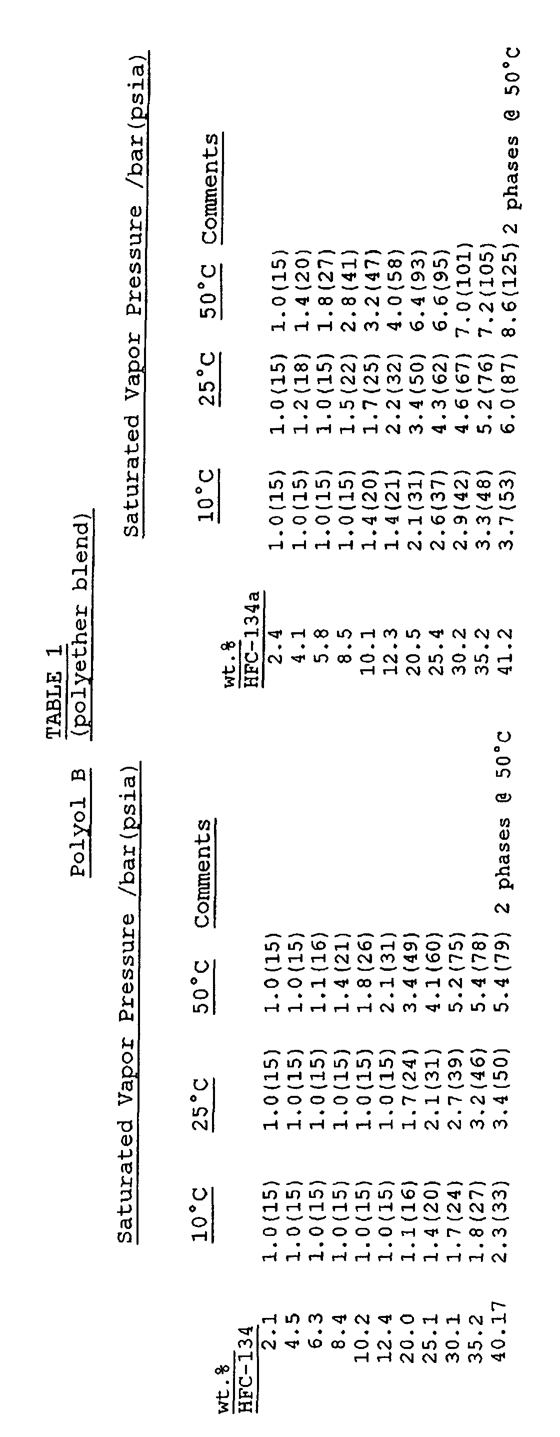

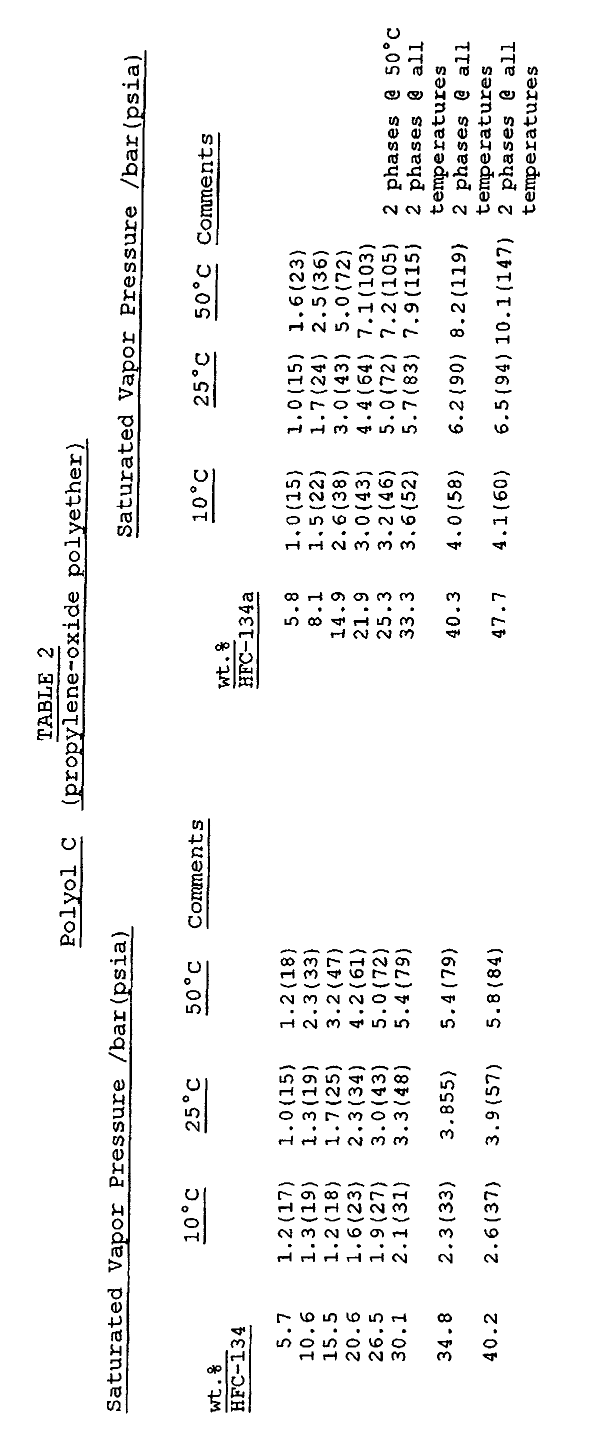

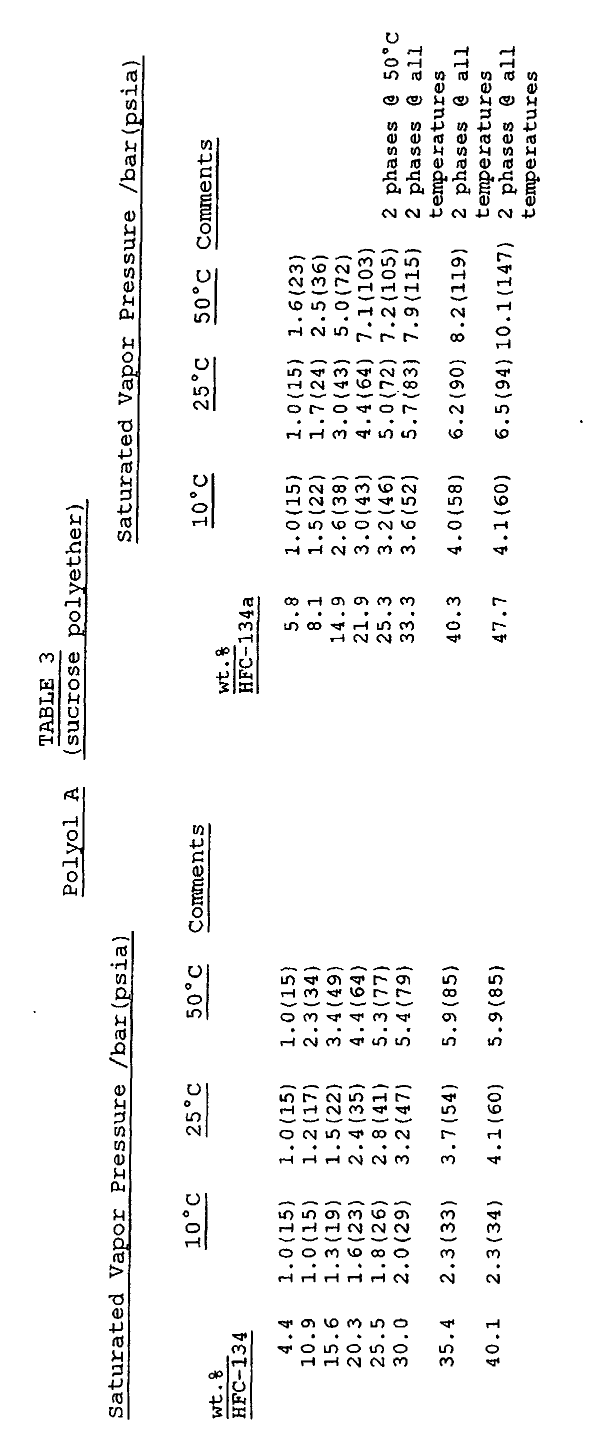

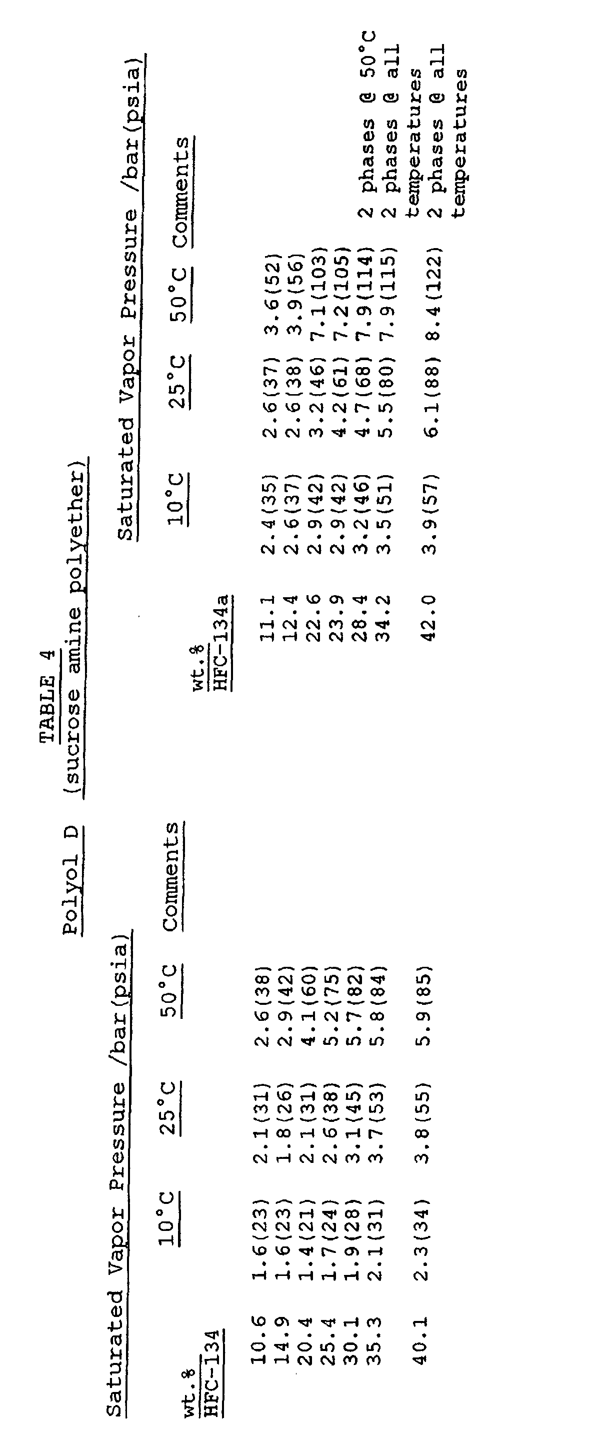

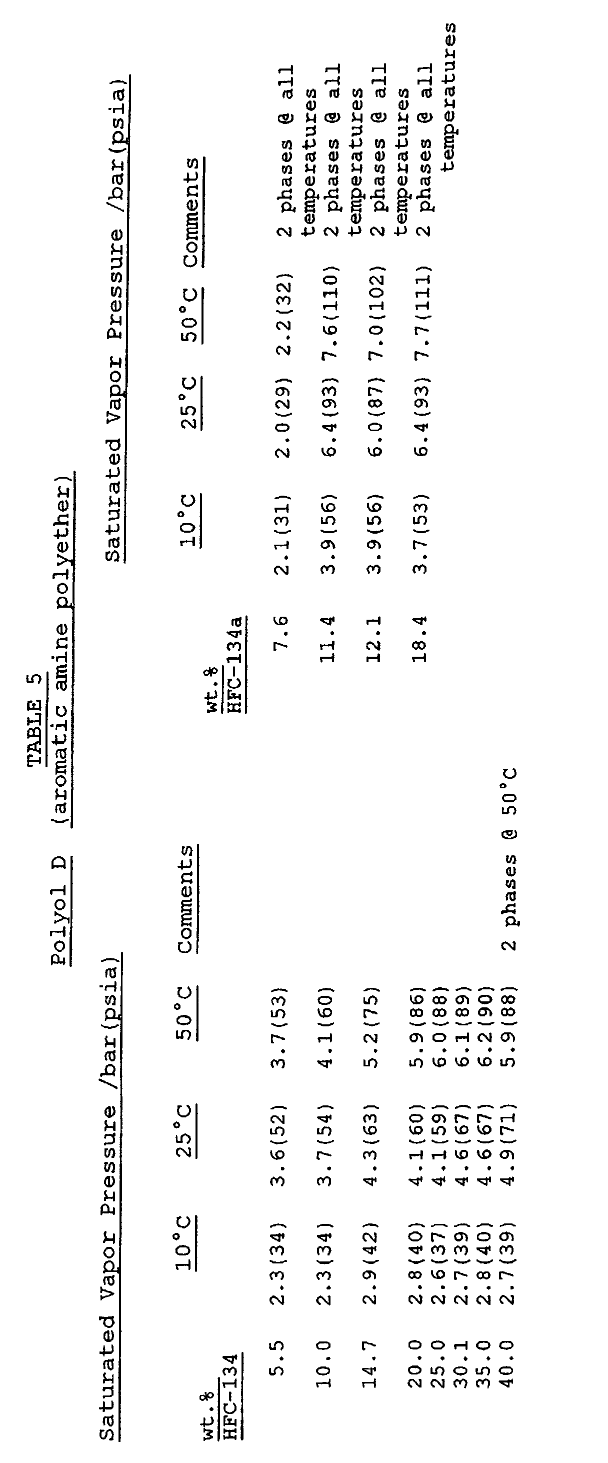

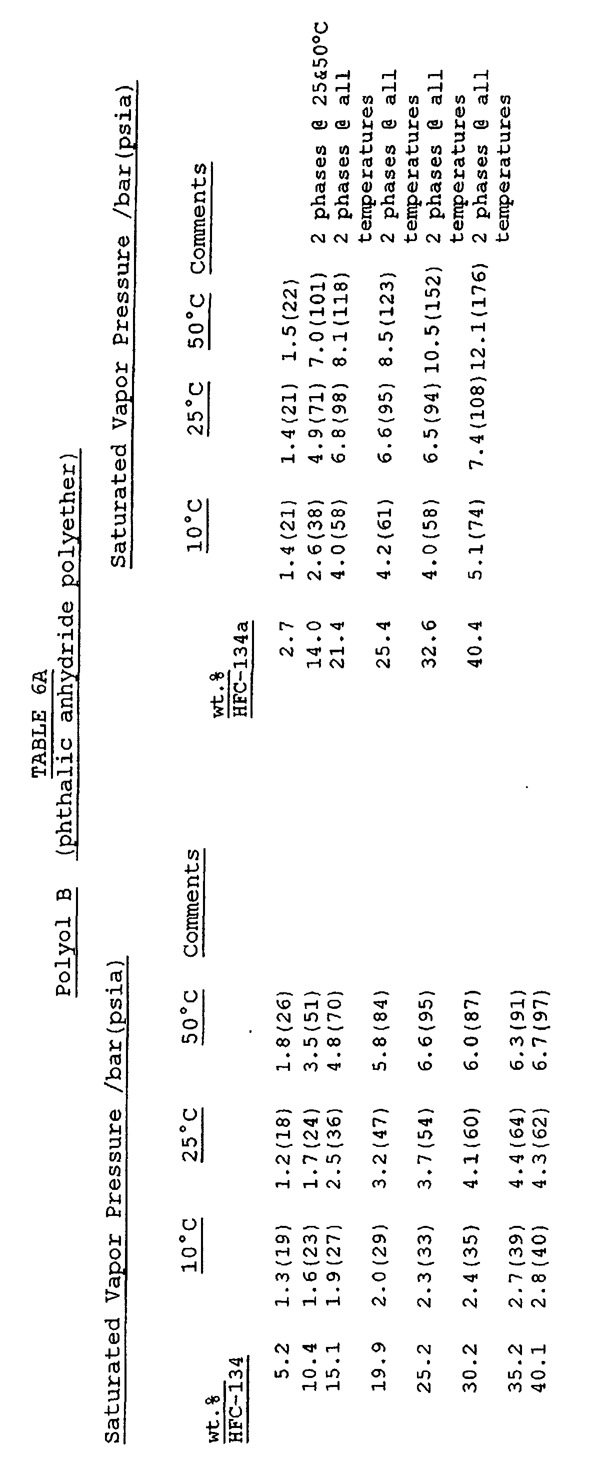

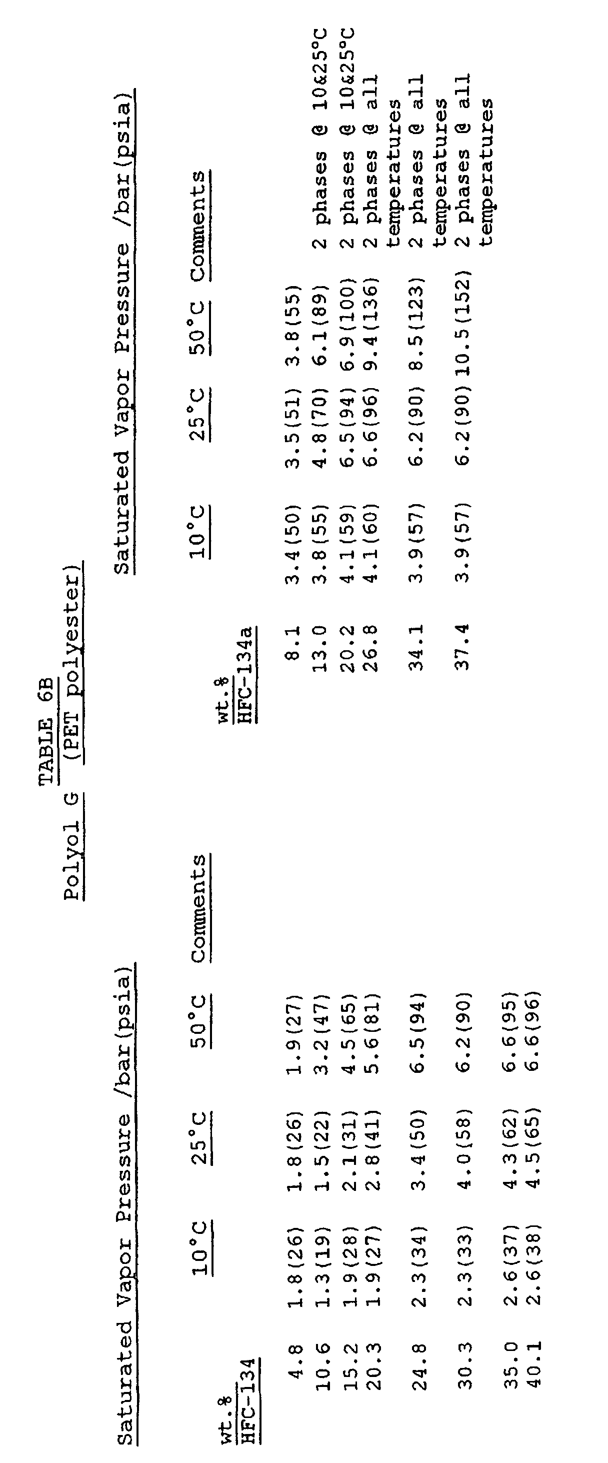

### Example 8

The following example illustrates use of HFC-134 to produce a typical rigid pour-in-place insulation foam. These foams were produced on a Gusmer Delta Rein 40, at a foam throughput of 9.17 Kg/minute (20.21 lbs/minute) and component feed temperatures at 21-27 °C. The low vapor pressure of the B-side composition employing HFC-134 allowed preparation of this foam in conventional apparatus.

| FOAM FORMULATION | | |
|---|---|---|
| Component | Parts by Weight | |
| MDI Isocyanate¹ | 150 | 150 |
| Polyether Polyol Blend² | 100 | 100 |
| (including silicone surfactant and catalyst) | | |
| HFC-134 Blowing Agent | 19.6 | - |
| HFC-134a Blowing Agent | - | 18.1 |

| Properties | | |
|---|---|---|
| Isocyanate Index (x100) | 130 | 130 |
| B-side System Vapor Pressure | | |
| / bar above atmospheric (PSIG) | 0 (0)³ | 1.7(25) |
| Foam Density / Kg m⁻³ | 29-30 | 29-30 |
| (lbs/ft³) | (1.8-1.9) | (1.8-1.9) |
| Thermal Conductivity | | |
| /milliWatt m⁻¹°C⁻¹ | 22.5-23.8 | 23.1-23.7 |
| (BTU·in/ft²·hr·°F) | (0.156-0.165) | (0.160-0.164) |
| Cell Structure | fine & | fine, slight |
| | uniform | pinholes, |
| | | occasional void |

| | | |
|---|---|---|
| 1-Low viscosity polymeric methylene diphenyl diisocyanate with an equivalent weight of 136. | | |
| 2-Sucrose-based polyether polyol with a hydroxyl value in the 325-350 range. | | |
| 3-As typical in conventional foam apparatus, a slight nitrogen pressure was used to feed the metering pumps. | | |

## Claims

1. A process for producing a closed-cell polyurethane or polyisocyanurate polymer foam comprising:
reacting an isocyanate-containing component with an active hydrogen-containing component having two or more active hydrogens in the presence of a blowing agent consisting of HFC-134, wherein said blowing agent is dissolved in said active-hydrogen containing component forming a homogenous solution and
wherein the ratio of the saturated vapor pressure of said blowing agent above said homogeneous solution to the saturated vapor pressure of blowing agent above an identical homogeneous solution containing HFC-134a as blowing agent in place of HFC-134, is less than the ratio of the normal vapour pressure of said blowing agent to the normal vapour pressure of HFC-134a.

2. A process as claimed in claim 1 wherein said closed-cell polyurethane or polyisocyanurate polymer foam contains within its cells a gaseous blowing agent consisting of HFC-134.

3. The process of claim 1 or claim 2 wherein said active hydrogen containing component is at least one polyol selected from the group consisting of polyether polyols, polyester polyols, and polyhydroxy-terminated acetal resins.

## Patentansprüche

1. Verfahren zur Herstellung eines geschlossenzelligen Polymerschaumstoffes auf der Basis von Polyurethan oder Polyisocyanurat,
welches eine Reagieren einer Isocyanat enthaltenden Komponente mit einer aktiven Wasserstoff enthaltenden Komponente aufweist, welch letztere zwei oder mehr aktive Wasserstoffe aufweist, in Anwesenheit eines Treibmittels, das aus HFC-134 besteht, wobei dieses Treibmittel in jener aktiven Wasserstoff enthaltenden Komponente aufgelöst wird unter Bildung einer homogenen Lösung, und
bei welchem das Verhältnis zwischen dem Druck des gesättigten Dampfes des Treibmittels über jener homogenen Lösung und dem Druck des gesättigten Dampfes des Treibmittels über einer identischen homogenen Lösung, die HFC-134a als Treibmittel an Stelle von HFC-134 enthält, kleiner ist als das Verhältnis des normalen Dampfdruckes des Treibmittels zu dem normalen Dampfdruck des HFC-134a.

2. Verfahren gemäss Anspruch 1, bei dem geschlossenzelliger Polymerschaumstoff auf der Basis von Polyurethan oder Polyisocyanurat innerhalb seiner Zellen ein gasförmiges Treibmittel enthält, das aus HFC-134 besteht.

3. Verfahren gemäss Anspruch 1 oder 2, bei dem jene aktiven Wasserstoff enthaltende Komponente aus mindestens einem Polyol besteht, das ausgewählt wird aus der Gruppe bestehend aus Polyetherpolyolen, Polyesterpolyolen und aus Acetalharzen mit endständigem Polyhydroxy.

## Revendications

1. Procédé de production d'une mousse de polymère polyuréthanne ou de polyisocyanurate à alvéoles fermées comprenant :
la réaction d'un composant comprenant un isocyanate avec un composant contenant de l'hydrogène actif ayant deux ou plusieurs hydrogènes actifs en présence d'un agent gonflant constitué de HFC-134, dans lequel ledit agent gonflant est dissous dans ledit composant contenant de l'hydrogène actif en formant une solution homogène et
dans lequel le rapport de la tension de vapeur saturée dudit agent gonflant au-dessus de ladite solution homogène à la tension de vapeur saturée de l'agent gonflant au-dessus d'une solution homogène identique contenant HFC-134a comme agent gonflant à la place de HFC-134, est inférieur au rapport de la tension de vapeur normale dudit agent gonflant à la tension de vapeur normale de HFC-134a.

2. Procédé selon la revendication 1 dans lequel ladite mousse de polymère de polyuréthanne ou de polyisocyanurate à alvéoles fermées contient dans ces alvéoles un agent gonflant gazeux constitué de HFC-134.

3. Procédé selon la revendication 1 ou la revendication 2 dans lequel ledit composant contenant de l'hydrogène actif est au moins un polyol choisi parmi le groupe constitué des polyéther polyols, des polyester polyols et des résines d'acétal à terminaisons polyhydroxy.
